# FASCICULE DE BREVET EUROPEEN

(11) **EP 2 707 945 B1**
(45) Date de publication et mention de la délivrance du brevet: **06.05.2020**
(21) Numéro de dépôt: 12722438.4
(22) Date de dépôt: 19.04.2012
(51) Int. Cl.: G05B 15/02, H02P 29/024, H02P 9/10, H02P 9/48

(54) **PROCEDE DE COMMANDE D'UNE MACHINE ELECTRIQUE TOURNANTE, SYSTEME DE COMMANDE ET MACHINE ELECTRIQUE TOURNANTE CORRESPONDANTS**
VERFAHREN ZUR STEUERUNG EINER ELEKTRISCHEN DREHMASCHINE, STEUERSYSTEM UND ELEKTRISCHE DREHMASCHINE DAFÜR
METHOD OF CONTROLLING A ROTATING ELECTRIC MACHINE, CONTROL SYSTEM AND ROTATING ELECTRIC MACHINE CORRESPONDING THERETO

(30) Priorité: 10.05.2011 FR 1154008
(43) Date de publication de la demande: 19.03.2014
(73) Titulaire: VALEO EQUIPEMENTS ELECTRIQUES MOTEUR, 94046 Créteil Cedex (FR)
(72) Inventeur: MASSON, Philippe, F-91330 Yerres (FR); MANDION, Thierry, F-77430 Champagne Sur Seine (FR); CHAUMAT, Damien, 77185 Lognes (FR)
(74) Mandataire: Cardon, Nicolas
(86) Numéro de dépôt international: PCT/FR2012/050853
(87) Numéro de publication internationale: WO 2012/172216

(56) Documents cités:
- EP-A2- 1 443 623
- FR-A1- 2 874 765
- FR-A1- 2 946 200
- FR-A1- 2 950 755
- FR-A1- 2 962 270
- FR-A1- 2 962 606
- JP-A- 2002 010 694
- US-A1- 2004 012 354
- D.J. PERREAULT: "A New Design for Automotive Alternators", 2000 INTERNATIONAL CONGRESS ON TRANSPORTATION ELECTRONICS (CONVERGENCE 2000), DETROIT, MI, October 2000 (2000-10), pages 583-594,
- Davide Giacomini- ET AL: "A novel high efficient approach to input bridges", , 29 May 2008 (2008-05-29), XP055553808, Retrieved from the Internet: URL:https://www.infineon.com/dgdl/tp-08052 7.pdf?fileId=5546d462533600a40153573fb97c3 e9f [retrieved on 2019-02-08]

## Description

### DOMAINE TECHNIQUE DE L'INVENTION.

La présente invention concerne un procédé de commande d'une machine électrique tournante polyphasée connectée à un réseau électrique, notamment un réseau de bord d'un véhicule automobile, en cas de délestage de charge, ainsi qu'un système de commande adapté à la mise en œuvre de ce procédé.

L'invention concerne aussi une machine électrique tournante comprenant ce système de commande.

### ARRIERE PLAN TECHNOLOGIQUE DE L'INVENTION.

Dans un véhicule automobile, ce réseau de bord sert à alimenter les différents équipements électriques dont est équipé le véhicule. L'alimentation est fournie par au moins une batterie. Celle-ci est rechargée grâce à une machine électrique tournante, à partir de l'énergie fournie par la rotation du moteur thermique du véhicule. Par machine électrique tournante, on entend de façon plus générale toute machine électrique tournante polyphasée utilisée pour la production de courant continu de sortie alimentant le réseau de bord. Il peut en particulier s'agir d'un alternateur ou encore d'un alterno-démarreur.

En cas de déconnexion brutale d'une charge électrique du réseau de bord, ou d'une batterie, ou des deux, il se crée un phénomène de délestage de charge ("load-dump" en anglais), qui occasionne une surtension sur le réseau de bord. En effet, une régulation d'un courant inducteur dans la machine ne pouvant agir assez rapidement à la suite du délestage de charge, la machine continue à délivrer le même courant de sortie alors que la consommation en courant du côté du réseau de bord a chuté.

Classiquement, la batterie du véhicule est une batterie 14 volts. En principe, grâce à sa faible résistance interne, elle limite à environ 17 volts les pics de tension qui se produisent sur le réseau de bord du véhicule en cas de délestage de charge. Cette batterie absorbe ainsi les petites surtensions. Néanmoins, en cas de déconnexion de la batterie (due à la rupture d'un câble d'alimentation, par exemple), une surtension très élevée peut se produire sur le réseau de bord. En effet, le courant d'inducteur de la machine ne pouvant s'annuler instantanément, cette dernière génère une force électromotrice et un courant proportionnels respectivement à la vitesse de la machine et au courant d'inducteur. Cette force électromotrice charge alors l'ensemble des condensateurs reliés au réseau de bord, et par conséquent fait monter de façon importante la tension continue sur le réseau de bord.

Dans une technique connue, la tension du réseau de bord est limitée à 32 volts maximum par le pont de redressement de la machine, les semi-conducteurs qui ne conduisent pas le courant de phase passant alternativement en mode de diode de Zener.

Cette surtension risque d'endommager les équipements électriques alimentés par le réseau de bord. C'est pourquoi tous les équipements électriques du véhicule sont dimensionnés pour résister à une tension maximale d'environ 32 volts, ce qui correspond à une surtension d'environ 20 volts.

On connaît diverses solutions permettant de limiter la tension sur le réseau de bord à une tension maximale admissible, c'est-à-dire la tension la plus élevée que peuvent supporter les équipements électriques du véhicule sans risque d'endommagement.

La solution exposée dans l'article "A New Design for Automotive Alternators", par D.J. Perreault at al., publié dans les actes du congrès "2000 International Congress on Transportation Electronics (Convergence 2000), Détroit, MI, Oct. 2000, pp. 583-594, consiste à bloquer à l'état passant au moins l'un des transistors en commutation d'un redresseur à découpage. De ce fait, au moins l'un des enroulements de phases est court-circuité. Le court-circuit est maintenu et l'excitation de la machine est diminuée jusqu'au moment où la tension est revenue à un niveau acceptable.

Cette méthode simple de suppression des transitoires présente toutefois des inconvénients:
- l'alimentation des équipements connectés au réseau de bord n'est pas garantie du fait que l'excitation n'est pas maintenue;
- la protection électrique et thermique des éléments semi-conducteurs du circuit de redressement n'est pas assurée.

On connaît de la demande US2004/012354 un procédé de commande d'une machine électrique tournante polyphasée fonctionnant en génératrice, et reliée à un réseau électrique, consistant à court-circuiter au moins un enroulement de phase en cas de délestage de charge, dans lequel on génère une commande de court-circuit dudit enroulement de phase quand une première mesure d'une tension dudit réseau dépasse une première valeur de seuil prédéterminée.

### DESCRIPTION GENERALE DE L'INVENTION.

La présente invention vise donc à pallier ces inconvénients.

Elle a précisément pour objet un procédé de commande d'une machine électrique tournante selon la revendication 1.

Selon une caractéristique particulière de l'invention, on obtient aussi fort avantageusement la première tension V par filtrage de la tension B⁺ du réseau avec une constante de temps prédéterminée T_{F}.

On autorise de préférence l'arrêt de cette commande de court-circuit quand la première mesure V devient inférieure à une deuxième valeur de seuil prédéterminée V2 inférieure à la première valeur de seuil prédéterminée V1 pendant au moins un premier temps prédéterminé T1.

Alternativement, on autorise avantageusement l'arrêt de la commande de court-circuit si une durée de cette commande devient supérieure à un deuxième temps prédéterminé T2 inférieur à un premier délai nécessaire à une détection d'un défaut de phase par un dispositif de régulation de la machine.

On tire bénéfice du fait que l'on inhibe la commande de court-circuit pendant un troisième temps prédéterminé T3 si la durée de la commande de court-circuit devient supérieure au deuxième temps prédéterminé T2, ce troisième temps prédéterminé T3 étant supérieur à un second délai nécessaire à une réinitialisation du dispositif de régulation de la machine.

On considère avantageusement que le courant de phase change de sens quand la seconde mesure Vds devient inférieure à une troisième valeur de seuil prédéterminée V3 ou supérieure à une quatrième valeur de seuil prédéterminée V4.

L'invention concerne également un système de commande d'une machine électrique tournante polyphasée selon la revendication 7.

Selon une caractéristique particulière, le système de commande selon l'invention comprend en outre avantageusement un module de filtrage de ladite tension de sortie présentant une constante de temps prédéterminée T_{F}.

Ce bloc de commande comprend de préférence un module de détection de surtension générant un signal de surtension représentatif de la présence d'une surtension sur le réseau pendant la durée de la constante de temps T_{F}.

Ce bloc de commande comprend avantageusement un module de détection de passage par zéro générant un signal de passage par zéro représentatif de l'annulation dudit courant de phase.

Dans ce mode de réalisation, le bloc de commande comprend fort avantageusement de plus:
- une porte logique ET générant une commande de court-circuit en sortie à partir du signal de surtension et du signal de passage par zéro en entrée;
- un module de validation générant une commande de court-circuit validée en autorisant l'arrêt de, ou inhibant, la commande de court-circuit en fonction d'un deuxième temps prédéterminé T2 inférieur à un premier délai nécessaire à une détection d'un défaut de phase par le circuit électronique de commande et de régulation, et en fonction d'un troisième temps prédéterminé T3 supérieur à un second délai nécessaire à une réinitialisation du circuit électronique de commande et de régulation;
- une porte logique OU générant la commande de commutation en sortie à partir de la commande de court-circuit validée et de la commande d'asservissement.

Ce module de validation comprend de préférence un compteur présentant une période de comptage égale au deuxième temps prédéterminé T2 et un décompteur présentant une période de décomptage égale au troisième temps prédéterminé T3.

On tire bénéfice du fait que le bloc de commande comprend en outre une mémoire comprenant des instructions représentatives du procédé selon l'invention.

L'invention concerne également une machine électrique tournante polyphasée apte à fonctionner en génératrice, remarquable en ce qu'elle comprend le système de commande décrit ci-dessus.

Ces quelques spécifications essentielles auront rendu évidents pour l'homme de métier les avantages apportés par l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** est un schéma de principe d'un système de commande d'une machine électrique tournante polyphasée fonctionnant en génératrice selon l'invention.
La **Figure 2** est un schéma de principe d'un bloc de commande du système de commande selon l'invention montré sur la **Figure 1****.**
La **Figure 3** est un organigramme montrant le principe de fonctionnement d'un module de détection de surtension compris dans le bloc de commande montré sur la **Figure 2****.**
La **Figure 4** est un organigramme montrant le principe de fonctionnement d'un module de détection de passage par zéro compris dans le bloc de commande montré sur la **Figure 2****.**
La **Figure 5** est un organigramme montrant le principe de fonctionnement d'un module de validation compris dans le bloc de commande montré sur la **Figure 2****.**
Les **Figures 6a et 6b** représentent l'évolution dans le temps de la tension du réseau de bord en cas de délestage de charge, l'évolution de cette tension filtrée, et la détection de la surtension, dans le cas où il existe des charges capacitives et dans le cas ou toutes les charges sont déconnectées, respectivement.
Les chronogrammes de la **Figure 7** montrent la validation, l'arrêt et l'inhibition de la commande ce court-circuit par le module de validation selon le principe de fonctionnement montré sur la **Figure 5****.**

### DESCRIPTION DES MODES DE REALISATION PREFERES DE L'INVENTION.

Les modes de réalisation préférés de l'invention correspondent de préférence à une machine électrique tournante polyphasée, de type alternateur ou alterno-démarreur, alimentant un réseau électrique de bord 1 connecté à une batterie 2.

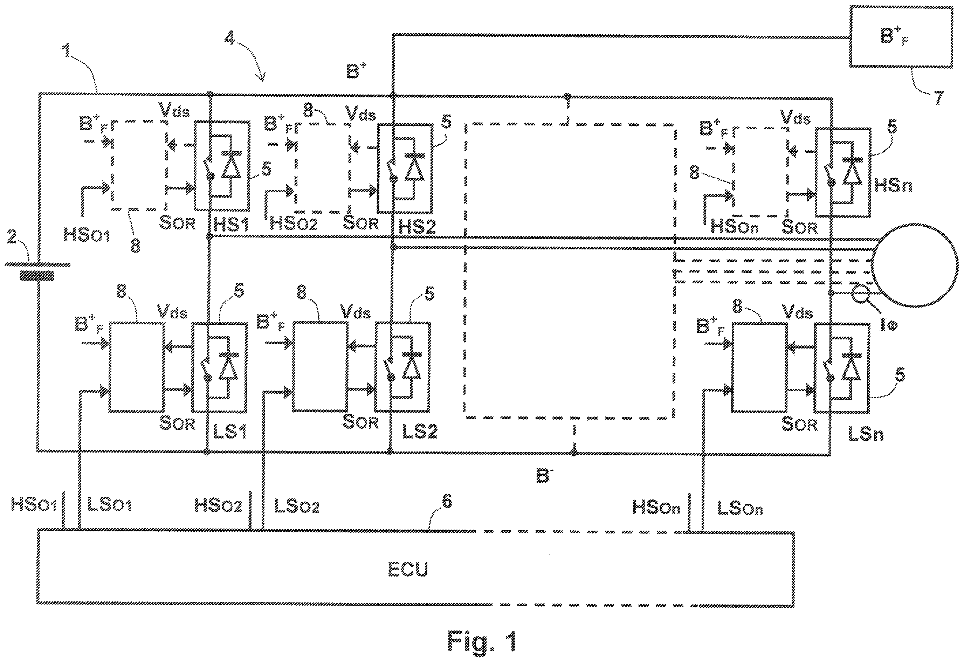

Il s'agit de préférence d'une machine présentant un nombre n d'enroulements de phases munie d'un circuit de redressement synchrone à semi-conducteurs 4 tel que représenté sur la **Figure 1** (n est de préférence égal à 3, mais peut être égal à 1).

Selon un agencement connu, le circuit de redressement synchrone 4 présente des branches comprenant chacune des interrupteurs pilotables 5 reliant, d'une part, les enroulements de phases 3 au pôle positif B⁺ de la batterie 2 (commutateurs HS1, HS2, HSn du côté "high-side"), et, d'autre part, au pôle négatif B⁻ de la batterie 2 (commutateurs LS1, LS2, LSn du côté "low-side"),

En fonctionnement normal de la génératrice, une unité électronique de commande et de régulation 6 ferme et ouvre alternativement les commutateurs "high-side" et "low-side" 5, selon un mode de fonctionnement connu d'un redresseur synchrone 4, au moyen de commandes d'asservissement HSO1, LSO1, HSO2, LSO2, HSOn, LSOn.

En cas de surtension sur le réseau de bord 1, on court-circuite un ou plusieurs enroulements de phases 3, simultanément ou de manière synchrone.

Le court-circuit est réalisé indifféremment en commandant, soit les interrupteurs 'low-side" LSO1, LSO2, LSOn (court-circuit de n phases par rapport au potentiel B⁻), soit les interrupteurs "high-side" HSO1, HSO2, HSOn (court-circuit de n phases par rapport au potentiel B⁺).

La tension utilisée pour la détection de surtension est la tension B⁺ que l'on filtre au moyen d'un module de filtrage 7 pour s'affranchir de l'ondulation de tension due au redressement et afin d'éviter les court-circuitages intempestifs des « n » phases de la machine. Cette tension est nommée B⁺_{F}. Le temps de prise en compte lié au filtrage, c'est-à-dire la constante de temps du filtre, est appelé T_{F}.

Suivant la structure du système, cette première mesure V est :
- Unique. Dans ce cas la commande de commutation des « n » composants pilotables est quasiment synchrone.
- Plurielle. Dans ce cas la commande de commutation des « n » composants pilotables est asynchrone et dépend à la fois de la structure du système et des tolérances des composants qui permettent les « n » détections de surtension que le système comporte.

Selon le procédé de l'invention, le court-circuit est commandé quand la première mesure V dépasse une première valeur de seuil prédéterminée V1 et qu'un courant de phase dans l'enroulement de phase correspondant s'annule et change de sens.

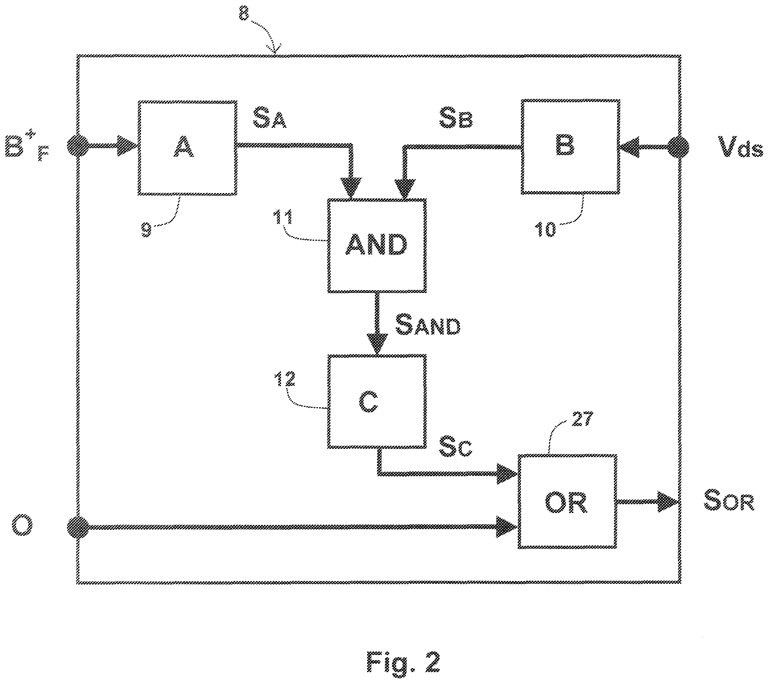

Comme le montre la **Figure 1****,** la commande de commutation SOR de chaque interrupteur 5 est élaborée par un bloc de commande 8, dont les détails sont représentés sur la **Figure 2****.**

Il va de soi que seuls les blocs de commande 5 "low-side" ou les blocs de commandes 5 "high-side" (représentés en pointillés) existent, selon que le court-circuit des enroulements de phases 3 est réalisé par rapport au B⁻ ou au B⁺, respectivement.

Ce bloc de commande 8 comprend un module de détection de surtension 9 générant un signal de surtension SA.

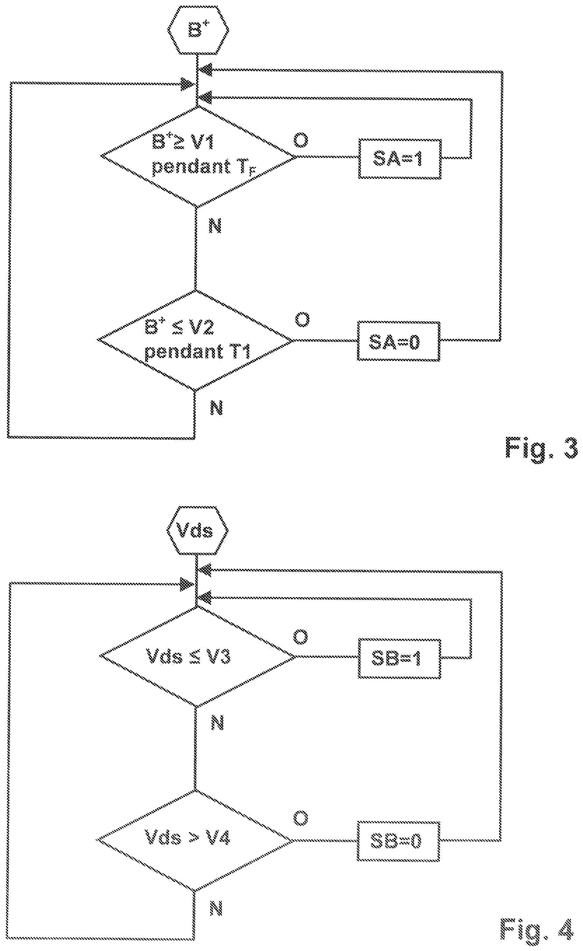

Le principe de fonctionnement de ce module de détection est représenté sur la **Figure 3****:**
- le signal de surtension SA est mis à 1 quand la tension B⁺ devient égale ou supérieure à une première valeur de seuil prédéterminée V1 pendant T_{F}, ce qui revient à comparer la première mesure V de la tension filtrée B⁺_{F} à ce seuil;
- le signal de surtension SA est mis à 0 quand la tension B+ devient égale ou inférieure à une deuxième valeur de seuil prédéterminée V2 pendant un premier temps prédéterminé T1.

Le bloc de commande 8 comprend également un module de détection de passage par zéro 10 du courant de phase IΦ, qui génère un signal de passage par zéro SB.

Plusieurs méthodes sont utilisables pour détecter la variation du courant de phase IΦ, notamment une mesure directe du courant de phase IΦ.

De préférence, le bloc de détection de passage par zéro 10 utilise une seconde mesure Vds d'une chute de tension aux bornes de l'interrupteur 5 que l'on pilote.

Selon le principe de fonctionnement montré sur la **Figure 4****,** lorsque la seconde mesure Vds devient inférieure ou égale à une troisième valeur de seuil prédéterminée V3 (la valeur de V3 et proche de zéro), on considère que le sens du courant est en train de s'inverser pour circuler dans la diode de l'interrupteur 5, et le signal de passage par zéro SB est mis à 1. Quand la seconde mesure Vds devient supérieure à une quatrième valeur de seuil prédéterminée V4, le signal de passage par zéro SB est au contraire mis à 0.

Ainsi que cela a été indiqué, le principe général de l'invention consiste à générer une commande de court-circuit SAND d'un enroulement de phase 3 quand une surtension V est détectée sur le réseau de bord 1 et quand le courant de phase IΦ s'annule et change de sens.

Comme le montre bien la **Figure 2****,** le bloc de commande 8 comprend donc une porte logique ET 11 qui génère cette commande de court-circuit SAND à partir du signal de surtension SA et du signal de passage par zéro SB en entrée.

Dans le but de pallier les inconvénients des dispositifs limitant les effets d'un délestage de charge connus de l'état de la technique, cette commande de court-circuit SA n'est pas directement appliquée sur l'interrupteur 5.

Cette commande de court-circuit SAND est validée, arrêtée ou inhibée selon le procédé de l'invention, par un module de validation 12 du bloc de commande 8.

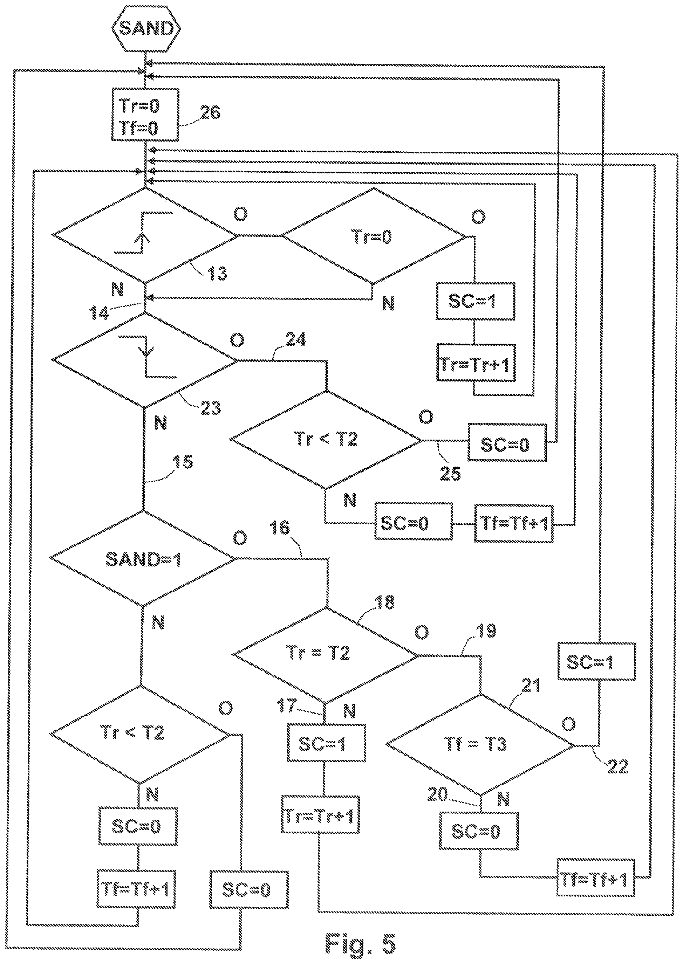

Le module de validation 12 génère une commande de court-circuit validée SC à partir de la commande de court-circuit SAND selon un algorithme complexe montré sur la **Figure 5****.**

Cet algorithme a pour but d'éviter les fausses détections de "défaut de phase" par le dispositif de régulation de la tension de sortie B⁺ de la machine en limitant la durée de la commande de court-circuit SAND à un deuxième temps prédéterminé T2. Ce deuxième temps prédéterminé T2 est inférieur à un premier délai nécessaire à une détection de ce défaut par le dispositif de régulation.

Pour ce faire le module de validation 12 comprend un compteur déclenché par le front montant 13 de la commande de court-circuit SAND après initialisation. La commande de court-circuit validée SC est mise à 1 tant qu'un premier temps de comptage Tr est inférieur au deuxième temps prédéterminé T2 et que la commande de court-circuit SAND reste au niveau 1 (Chemin 14, 15, 16, et 17 de la **Figure 5**).

Quant la durée de la commande de court-circuit atteint T2, c'est-à-dire quand l'égalité du temps de comptage Tr et de T2 est détectée 18 par le compteur, la commande de court-circuit SAND est arrêtée, et la commande de court-circuit validée SC est mise à 0 (Voir chemin 14, 15, 16, 19 et 20).

Afin de permettre au dispositif de régulation de la machine de se réinitialiser correctement après le forçage à 0 de la commande de court-circuit validée SC, la commande de court-circuit SAND est inhibée pendant un troisième temps prédéterminé T3. Ce troisième temps prédéterminé T3 est supérieur à un second délai nécessaire à la réinitialisation.

Pour ce faire le module de validation 12 comprend un décompteur déclenché à la fin du temps de comptage Tr, c'est-à-dire T2. Tant que le temps de décomptage Tf est inférieur à T3, la commande de court-circuit validée SC est maintenue au niveau 0, même si la commande de court-circuit SAND est au niveau 1 (Voir chemin 14, 15, 16, 19 et 20).

Quand l'égalité du temps de décomptage Tf et de T3 est détectée 21 par le décompteur, la commande de court-circuit SAND est validée, et la commande de court-circuit validée SC est mise à 1 si la commande de court-circuit SAND est au niveau 1 (Voir chemin 14, 15, 16, 19 et 22).

Si la commande de court-circuit SAND passe au niveau 0 (front descendant 23) avant la fin du comptage Tr, la commande de court-circuit validée SC passe immédiatement à 0 (Chemin 24, 25), et le compteur et le décompteur sont réinitialisés 26.

Le compteur et le décompteur sont aussi réinitialisés 26 à la fin du temps de décomptage, c'est-à-dire quand Tf est égal à T3 (Chemin 14, 15, 16, 19 et 22).

Une porte logique OU 27 du bloc de commande 8 superpose la commande de court-circuit validée SC à la commande d'asservissement O issue de l'unité électronique de commande et de régulation 6 pour générer la commande de commutation SOR appliquée sur les interrupteurs 5.

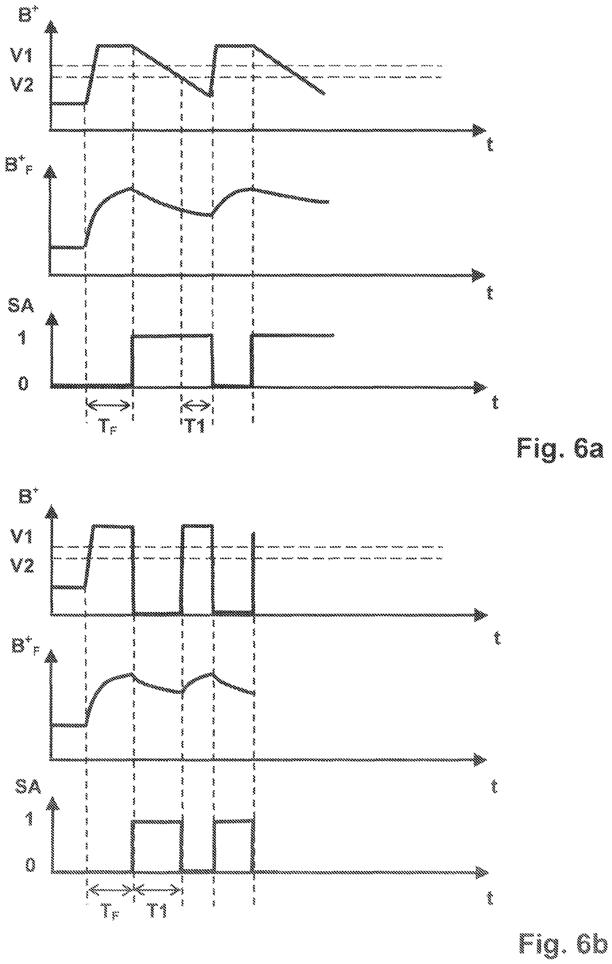

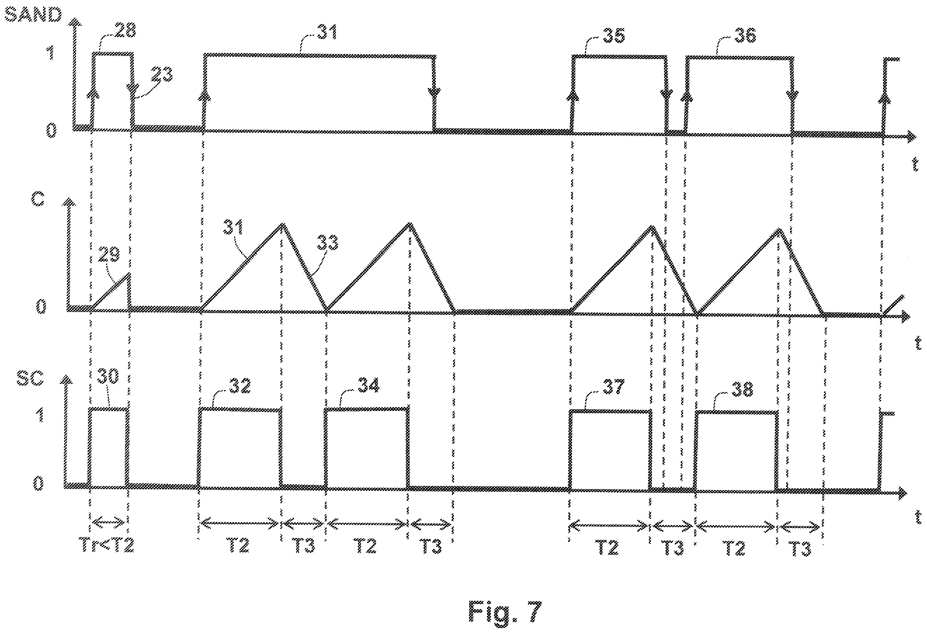

Les **Figures 6a, 6b** **et** **7** montrent des exemples de chronogrammes résultants de la mise en œuvre des algorithmes exposés ci-dessus.

La **Figure 6a** montre la génération du signal de surtension SA à partir de la tension de réseau B⁺ dans le cas où le délestage de charge se produit sur un réseau 1 présentant des charges capacitives.

Quand la tension B⁺ devient supérieure à la première valeur de seuil prédéterminée V1, le signal de surtension SA n'est mis à 1 qu'après le temps d'établissement du filtre T_{F}. Le signal de surtension SA n'est mis à 0 que si la tension B⁺ devient inférieure à la deuxième valeur de seuil prédéterminée V2 pendant le premier temps prédéterminé T1.

La **Figure 6b** montre de manière analogue la génération du signal de surtension SA à partir de la tension de réseau B⁺ dans le cas où le délestage de charge est produit par la déconnection de toutes les charges de la machine.

La **Figure 7** montre bien les effets du module de validation 12 sur la commande de court-circuit SAND selon la durée de son niveau haut.

Pour un niveau haut 28 de durée inférieure au deuxième temps prédéterminé T2, un front descendant 23 se produit avant la fin du comptage 29. Dans ce cas, la commande de court-circuit validée SC présente un niveau haut 30 identique à la commande de court-circuit SAND.

Pour un niveau haut 31 de durée très supérieure au deuxième temps prédéterminé T2, le comptage 31 interrompt le niveau haut 32 de la commande de court-circuit validée SC au bout du deuxième temps prédéterminé T2. Le décomptage 33 rétablit le niveau haut 34 au bout du troisième temps prédéterminé T3.

Pour un niveau haut 35 de durée un peu supérieure au deuxième temps prédéterminé T2 suivi rapidement d'un autre niveau haut 36, le niveau haut 37 de la commande de court-circuit validée SC est interrompu au bout du deuxième temps prédéterminé T2, et n'est rétabli 38 qu'après le troisième temps prédéterminé T3.

De manière connue en soi les blocs de commandes 8 sont de préférence réalisés au moyen d'un microcontrôleur ou d'un ASIC spécifique.

Dans le cas d'une implémentation par un microcontrôleur, une mémoire comprend avantageusement les instructions représentatives des algorithmes montrés sur les **Figures 3, 4** **et** **5****.**

On pourra tirer bénéfice d'une implémentation des blocs de commande 8 par une modification appropriée d'une unité électronique de commande 6 existante.

Pour améliorer le fonctionnement, il est envisageable de n'autoriser l'arrêt de la commande de court-circuit SAND que lorsque le courant dans le composant piloté (Low-side (LSx) ou High-side, (HSx) suivant la stratégie choisie) s'annule. Ceci afin d'éviter l'ouverture de l'interrupteur 5 lorsque la valeur du courant commuté est élevée. En effet, suivant la stratégie retenue (Nombre de phases court-circuitées simultanément) le déséquilibre en courant peut être tel que la valeur crête de courant devienne très supérieure à la valeur pour laquelle le composant à été dimensionné.

Comme il va de soi, l'invention ne se limite pas aux seuls modes d'exécution préférentiels décrits ci-dessus.

L'invention embrasse donc au contraire toutes les variantes possibles de réalisation qui resteraient dans le cadre défini par les revendications ci-après.

## Revendications

1. Procédé de commande d'une machine électrique tournante polyphasée fonctionnant en génératrice, et reliée à un réseau électrique (1) à travers un circuit de redressement synchrone (4) présentant une pluralité de branches comprenant chacune au moins un interrupteur à semi-conducteur (5) connecté à un enroulement de phase (3) de la machine électrique, consistant à court-circuiter au moins un enroulement de phase (3) en cas de délestage de charge, **caractérisé en ce que** l'on génère une commande de court-circuit (SAND) dudit enroulement de phase (3) quand une première mesure V d'une tension B+ dudit réseau (1) dépasse une première valeur de seuil prédéterminée V1 et qu'un courant de phase (IΦ) dans ledit enroulement de phase (3) s'annule et change de sens, la variation dudit courant de phase (IΦ) étant détectée au moyen d'une seconde mesure Vds correspondant à une chute de tension aux bornes de l'interrupteur à semi-conducteur respectif (5) **en ce que** l'on court-circuite ledit enroulement de phase (3) au moyen de l'interrupteur à semi-conducteur respectif (5), et **en ce que** cet interrupteur à semi-conducteur (5) est piloté simultanément par ladite commande de court-circuit (SAND, SC) et par une commande d'asservissement (O) dudit circuit de redressement synchrone (4).

2. Procédé de commande d'une machine électrique tournante selon la revendication 1, **caractérisé en ce que** l'on obtient ladite première tension V par filtrage de ladite tension B+ dudit réseau (1) avec une constante de temps prédéterminée T_{F}.

3. Procédé de commande d'une machine électrique tournante selon la revendication 1 ou 2, **caractérisé en ce que** l'on autorise l'arrêt de ladite commande de court-circuit (SAND) quand ladite première mesure V devient inférieure à une deuxième valeur de seuil prédéterminée V2 inférieure à ladite première valeur de seuil prédéterminée V1 pendant au moins un premier temps prédéterminé T1.

4. Procédé de commande d'une machine électrique tournante selon la revendication 1 ou 2, **caractérisé en ce que** l'on autorise l'arrêt de ladite commande de court-circuit (SAND) si une durée de ladite commande de court-circuit (SAND) devient supérieure à un deuxième temps prédéterminé T2 inférieur à un premier délai nécessaire à une détection d'un défaut de phase par un dispositif de régulation de ladite machine.

5. Procédé de commande d'une machine électrique tournante selon la revendication 4, **caractérisé en ce que** l'on inhibe ladite commande de court-circuit (SAND) pendant un troisième temps prédéterminé T3 si ladite durée de ladite commande de court-circuit (SAND) devient supérieure audit deuxième temps prédéterminé T2, ledit troisième temps prédéterminé T3 étant supérieur à un second délai nécessaire à une réinitialisation dudit dispositif de régulation de ladite machine.

6. Procédé de commande d'une machine électrique tournante selon l'une quelconque des revendications précédentes, **caractérisé en ce que** l'on considère que ledit courant de phase (IΦ) change de sens quand ladite seconde mesure Vds devient inférieure à une troisième valeur de seuil prédéterminée V3 ou supérieure à une quatrième valeur de seuil prédéterminée V4.

7. Système de commande d'une machine électrique tournante polyphasée fonctionnant en génératrice, et connectable à un réseau électrique (1), ledit système comprenant:
- un circuit de redressement synchrone (4) présentant une pluralité de branches comprenant chacune au moins un interrupteur (5) connectable à un enroulement de phase (3), apte à alimenter ledit réseau électrique (1) sous une tension de sortie B+
- un circuit électronique de commande et de régulation (6) ouvrant ou fermant l'interrupteur respectif (5) au moyen d'une commande d'asservissement (O);
**caractérisé en ce que** le système comprend un bloc de commande (8) associé audit interrupteur respectif (5), adapté à générer un signal de commutation (Sc) pour fermer l'interrupteur respectif (5) et adapté à la mise en œuvre du procédé selon l'une quelconque des revendications 1 à 6 précédentes.

8. Système de commande d'une machine électrique tournante selon la revendication 7, **caractérisé en ce qu'**il comprend en outre un module de filtrage (7) de ladite tension de sortie B⁺ présentant une constante de temps prédéterminée T_{F}.

9. Système de commande d'une machine électrique tournante selon la revendication 8, **caractérisé en ce que** ledit bloc de commande (8) comprend un module de détection de surtension (9) générant un signal de surtension (SA) représentatif de la présence d'une surtension sur ledit réseau (1) pendant la durée de la constante de temps prédéterminée T_{F}.

10. Système de commande d'une machine électrique tournante selon la revendication 7, **caractérisé en ce que** ledit bloc de commande (8) comprend un module de détection de passage par zéro (10) générant un signal de passage par zéro (SB) représentatif de l'annulation dudit courant de phase (IΦ).

11. Système de commande d'une machine électrique tournante selon les revendications 9 et 10 **caractérisé en ce que** ledit bloc de commande (8) comprend de plus:
- une porte logique ET (11) générant une commande de court-circuit (SAND) en sortie à partir dudit signal de surtension (SA) et dudit signal de passage par zéro (S_{B}) en entrée;
- un module de validation (12) générant une commande de court-circuit validée (S_{C}) en autorisant l'arrêt de, ou inhibant, ladite commande de court-circuit (SAND) en fonction d'un deuxième temps prédéterminé T2 inférieur à un premier délai nécessaire à une détection d'un défaut de phase par ledit circuit électronique de commande et de régulation (6), et en fonction d'un troisième temps prédéterminé T3 supérieur à un second délai nécessaire à une réinitialisation dudit circuit électronique de commande et de régulation (6);
- une porte logique OU (27) générant ladite commande de commutation (S_{OR}) en sortie à partir de ladite commande de court-circuit validée (S_{C}) et de ladite commande d'asservissement (O).

12. Système de commande d'une machine électrique tournante selon la revendication 11, **caractérisé en ce que** ledit module de validation (12) comprend un compteur présentant une période de comptage égale audit deuxième temps prédéterminé T2 et un décompteur présentant une période de décomptage égale audit troisième temps prédéterminé T3.

13. Système de commande d'une machine électrique tournante selon l'une quelconque des revendications 7 à 12 précédentes, caractérisé en ce ledit bloc de commande (8) comprend en outre une mémoire comprenant des instructions représentatives du procédé selon l'une quelconque des revendications 1 à 6 précédentes.

14. Machine électrique tournante polyphasée apte à fonctionner en génératrice, **caractérisée en ce qu'**elle comprend un système de commande selon l'une quelconque des revendications 7 à 13 précédentes.

## Patentansprüche

1. Verfahren zur Steuerung einer mehrphasigen drehenden elektrischen Maschine, die als Generator arbeitet und mit einem Stromnetz (1) über eine Synchrongleichrichterschaltung (4) verbunden ist, die eine Mehrzahl von Zweigen aufweist, die jeweils mindestens einen Halbleiterschalter (5) umfassen, der mit einer Phasenwicklung der elektrischen Maschine verbunden ist, wobei das Verfahren darin besteht, mindestens eine Phasenwicklung (3) im Fall eines Lastabwurfes kurzzuschließen, **dadurch gekennzeichnet, dass** ein Befehl zum Kurzschließen (SAND) der Phasenwicklung (3) generiert wird, wenn eine erste Messung V einer Spannung B+ des Netzes (1) einen ersten vorbestimmten Schwellenwert V1 überschreitet und ein Phasenstrom (IΦ) in der Phasenwicklung (3) annulliert wird und seine Richtung ändert, wobei die Änderung des Phasenstroms (IΦ) mittels einer zweiten Messung Vds erkannt wird, die einem Spannungsabfall an den Klemmen des jeweiligen Halbleiterschalters (5) entspricht, dass die Phasenwicklung (3) mittels des jeweiligen Halbleiterschalters (5) kurzgeschlossen wird und dass dieser Halbleiterschalter gleichzeitig durch den Kurzschließbefehl (SAND, SC) und durch einen Rückkopplungsbefehl (O) der Synchrongleichrichterschaltung (4) angesteuert wird.

2. Verfahren zur Steuerung einer drehenden elektrischen Maschine nach Anspruch 1, **dadurch gekennzeichnet, dass** die erste Spannung V durch Filtern der Spannung B+ des Netzes (1) mit einer vorbestimmten Zeitkonstante T_{F} erhalten wird.

3. Verfahren zur Steuerung einer drehenden elektrischen Maschine nach Anspruch 1 oder 2, **dadurch gekennzeichnet, dass** das Stoppen des Kurzschließbefehls (SAND) zugelassen wird, wenn die erste Messung V während mindestens einer ersten vorbestimmten Zeit T1 kleiner als ein zweiter vorbestimmter Schwellenwert V2 wird, der kleiner als der erste vorbestimmte Schwellenwert V1 ist.

4. Verfahren zur Steuerung einer drehenden elektrischen Maschine nach Anspruch 1 oder 2, **dadurch gekennzeichnet, dass** das Stoppen des Kurzschließbefehls (SAND) zugelassen wird, wenn eine Dauer des Kurzschließbefehls (SAND) größer als eine zweite vorbestimmte Zeit T2 wird, die kleiner als eine erste Verzögerung ist, die zur Erkennung eines Phasenfehlers durch eine Regelungsvorrichtung der Maschine erforderlich ist.

5. Verfahren zur Steuerung einer drehenden elektrischen Maschine nach Anspruch 4, **dadurch gekennzeichnet, dass** der Kurzschließbefehl (SAND) während einer dritten vorbestimmten Zeit T3 deaktiviert wird, wenn die Dauer des Kurzschließbefehls (SAND) größer als die zweite vorbestimmte Zeit T2 wird, wobei die dritte vorbestimmte Zeit T3 größer als eine zweite Verzögerung ist, die zu einer Reinitialisierung der Regelungsvorrichtung der Maschine erforderlich ist.

6. Verfahren zur Steuerung einer drehenden elektrischen Maschine nach einem der vorhergehenden Ansprüche, **dadurch gekennzeichnet, dass** davon ausgegangen wird, dass der Phasenstrom (IΦ) die Richtung ändert, wenn die zweite Messung Vds kleiner als ein dritter vorbestimmter Schwellenwert V3 oder größer als ein vierter vorbestimmter Schwellenwert V4 wird.

7. System zur Steuerung einer mehrphasigen drehenden elektrischen Maschine, die als Generator arbeitet und an ein Stromnetz (1) anschließbar ist, wobei das System umfasst:
- eine Synchrongleichrichterschaltung (4), die eine Mehrzahl von Zweigen aufweist, die jeweils mindestens einen Schalter (5) umfassen, der an eine Phasenwicklung (3) anschließbar ist, und geeignet ist, das Stromnetz (1) mit einer Ausgangsspannung B+ zu speisen;
- eine elektronische Steuer- und Regelungsschaltung (6), die den jeweiligen Schalter (5) mittels eines Rückkopplungsbefehls (O) öffnet oder schließt;
**dadurch gekennzeichnet, dass** das System einen dem jeweiligen Schalter (5) zugeordneten Steuerungsblock (8) umfasst, der geeignet ist, ein Schaltsignal (Sc) zu generieren, um den jeweiligen Schalter (5) zu schließen, und zur Implementierung des Verfahrens nach einem der vorhergehenden Ansprüche 1 bis 6 geeignet ist.

8. System zur Steuerung einer drehenden elektrischen Maschine nach Anspruch 7, **dadurch gekennzeichnet, dass** es ferner ein Filtermodul (7) zum Filtern der Ausgangsspannung B+ umfasst, das eine vorbestimmte Zeitkonstante T_{F} aufweist.

9. System zur Steuerung einer drehenden elektrischen Maschine nach Anspruch 8, **dadurch gekennzeichnet, dass** der Steuerungsblock (8) ein Überspannungserkennungsmodul (9) umfasst, das ein Überspannungssignal (SA) generiert, das für das Vorliegen einer Überspannung in dem Netz (1) während der Dauer der vorbestimmten Zeitkonstante T_{F} repräsentativ ist.

10. System zur Steuerung einer drehenden elektrischen Maschine nach Anspruch 7, **dadurch gekennzeichnet, dass** der Steuerungsblock (8) ein Nulldurchgangserkennungsmodul (10) umfasst, das ein Nulldurchgangssignal (SB) generiert, das für die Annullierung des Phasenstroms (IΦ) repräsentativ ist.

11. System zur Steuerung einer drehenden elektrischen Maschine nach den Ansprüchen 9 und 10, **dadurch gekennzeichnet, dass** der Steuerungsblock (8) zusätzlich umfasst:
- ein UND-Logikgatter (11), das einen Kurzschließbefehl (SAND) im Ausgang ausgehend von dem Überspannungssignal (SA) und dem Nulldurchgangssignal (SB) im Eingang generiert;
- ein Validierungsmodul (12), das einen validierten Kurzschließbefehl (Sc) generiert, indem es das Stoppen des Kurzschließbefehls (SAND) zulässt oder diesen deaktiviert in Abhängigkeit von einer zweiten vorbestimmten Zeit T2, die kleiner als eine erste Verzögerung ist, die zu einer Erkennung eines Phasenfehlers durch die elektronische Steuer- und Regelungsschaltung (6) erforderlich ist, und in Abhängigkeit von einer dritten vorbestimmten Zeit T3, die größer als eine zweite Verzögerung ist, die zu einer Reinitialisierung der elektronischen Steuer- und Regelungsschaltung (6) erforderlich ist;
- ein ODER-Logikgatter (27), das den Umschaltbefehl (SOR) im Ausgang ausgehend von dem validierten Kurzschließbefehl (Sc) und dem Rückkopplungsbefehl (O) generiert.

12. System zur Steuerung einer drehenden elektrischen Maschine nach Anspruch 11, **dadurch gekennzeichnet, dass** das Validierungsmodul (12) einen Zähler umfasst, der eine Zählperiode gleich der zweiten vorbestimmten Zeit T2 aufweist, und einen Abwärtszähler, der eine Abwärtszählperiode gleich der dritten vorbestimmten Zeit T3 aufweist.

13. System zur Steuerung einer drehenden elektrischen Maschine nach einem der vorhergehenden Ansprüche 7 bis 12, **dadurch gekennzeichnet, dass** der Steuerungsblock (8) ferner einen Speicher umfasst, der Anweisungen umfasst, die für das Verfahren nach einem der vorhergehenden Ansprüche 1 bis 6 repräsentativ sind.

14. Mehrphasige drehende elektrische Maschine, die geeignet ist, als Generator zu arbeiten, **dadurch gekennzeichnet, dass** sie ein Steuerungssystem nach einem der vorhergehenden Ansprüche 7 bis 13 umfasst.

## Claims

1. Method for controlling a polyphase rotary electric machine which operates as a generator and is connected to an electrical network (1) via a synchronous rectifier circuit (4) that has a plurality of branches, each comprising at least one semiconductor switch (5) connected to a phase winding (3) of the electric machine, the method consisting in shorting at least one phase winding (3) in the event of a load dump, **characterized in that** a shorting command (S_{AND}) for shorting said phase winding (3) is generated when a first measurement V of a voltage B+ of said network (1) exceeds a first predetermined threshold value V1 and a phase current (IΦ) in said phase winding (3) becomes zero and changes direction, the variation in said phase current (IΦ) being detected by means of a second measurement Vds that corresponds to a voltage drop across the terminals of the respective semiconductor switch (5), **in that** said phase winding (3) is shorted by means of the respective semiconductor switch (5) and **in that** this semiconductor switch (5) is controlled simultaneously by said shorting command (SAND, SC) and by a feedback-control command (O) for controlling said synchronous rectifier circuit (4).

2. Method for controlling a rotary electric machine according to Claim 1, **characterized in that** said first voltage V is obtained by filtering said voltage B+ of said network (1) with a predetermined time constant T_{F}.

3. Method for controlling a rotary electric machine according to Claim 1 or 2, **characterized in that** the cancelling of said shorting command (S_{AND}) is authorized when said first measurement V falls below a second predetermined threshold value V2, which is lower than said first predetermined threshold value V1, for at least a first predetermined length of time T1.

4. Method for controlling a rotary electric machine according to Claim 1 or 2, **characterized in that** the cancelling of said shorting command (S_{AND}) is authorized if a duration of said shorting command (S_{AND}) extends beyond a second predetermined length of time T2, which is shorter than a first period needed for a regulation device of said machine to detect a phase fault.

5. Method for controlling a rotary electric machine according to Claim 4, **characterized in that** said shorting command (S_{AND}) is disabled for a third predetermined length of time T3 if said duration of said shorting command (S_{AND}) extends beyond said second predetermined length of time T2, said third predetermined length of time T3 being longer than a second period needed to reset said regulation device of said machine.

6. Method for controlling a rotary electric machine according to any one of the preceding claims, **characterized in that** said phase current (IΦ) is considered to change direction when said second measurement Vds falls below a third predetermined threshold value V3 or rises above a fourth predetermined threshold value V4.

7. System for controlling a polyphase rotary electric machine which operates as a generator and can be connected to an electrical network (1), said system comprising:
- a synchronous rectifier circuit (4) having a plurality of branches, each comprising at least one switch (5) that can be connected to a phase winding (3), capable of supplying power to said electrical network (1) at an output voltage B+;
- an electronic control and regulation circuit (6) that opens or closes the respective switch (5) by means of a feedback-control command (O),
**characterized in that** the system comprises a control block (8) that is associated with said respective switch (5) and is suitable for generating a switching signal (Sc) for closing the respective switch (5) and suitable for implementing the method according to any one of the preceding Claims 1 to 6.

8. System for controlling a rotary electric machine according to Claim 7, **characterized in that** it further comprises a filtering module (7) for filtering said output voltage B⁺, which filtering module has a predetermined time constant T_{F}.

9. System for controlling a rotary electric machine according to Claim 8, **characterized in that** said control block (8) comprises an overvoltage detection module (9), which generates an overvoltage signal (S_{A}) representative of the presence of an overvoltage on said network (1) for the duration of the predetermined time constant T_{F}.

10. System for controlling a rotary electric machine according to Claim 7, **characterized in that** said control block (8) comprises a zero-crossing detection module (10) that generates a zero-crossing signal (S_{B}) representative of said phase current (IΦ) becoming zero.

11. System for controlling a rotary electric machine according to Claims 9 and 10, **characterized in that** said control block (8) further comprises:
- an AND logic gate (11) that generates a shorting command (S_{AND}) as output on the basis of said overvoltage signal (S_{A}) and said zero-crossing signal (S_{B}) as inputs;
- a validation module (12) that generates a validated shorting command (S_{C}) by authorizing the cancelling of, or disabling, said shorting command (S_{AND}) on the basis of a second predetermined length of time T2 shorter than a first period needed for said electronic control and regulation circuit (6) to detect a phase fault, and on the basis of a third predetermined length of time T3 longer than a second period needed to reset said electronic control and regulation circuit (6);
- an OR logic gate (27) that generates said switching command (S_{OR}) as output on the basis of said validated shorting command (S_{C}) and said feedback-control command (O).

12. System for controlling a rotary electric machine according to Claim 11, **characterized in that** said validation module (12) comprises an up-counter that has an up-counting period equal to said second predetermined length of time T2 and a down-counter that has a down-counting period equal to said third predetermined length of time T3.

13. System for controlling a rotary electric machine according to any one of the preceding Claims 7 to 12, **characterized in that** said control block (8) further comprises a memory that comprises instructions representative of the method according to any one of the preceding Claims 1 to 6.

14. Polyphase rotary electric machine capable of operating as a generator, **characterized in that** it comprises a control system according to any one of the preceding Claims 7 to 13.
